# EUROPEAN PATENT APPLICATION

(11) **EP 0 841 612 A2**
(43) Date of publication of application: **13.05.1998**
(21) Application number: 97119527.6
(22) Date of filing: 07.11.1997
(51) Int. Cl.: G06F 9/44

(54) **Framework for software development**

(30) Priority: 08.11.1996 EP 96117940; 14.08.1997 EP 97114037
(71) Applicant: International Business Machines Corporation, Armonk, N.Y. 10504 (US)
(72) Inventor: Bohrer, Kathy, Austin, Texas 78727 (US); Graser, Timothy, Rochester, Minnesota 55901 (US); Carey, James, Rochester, Minnesota 55901 (US); Carlson, Brent, Rochester, Minnesota 55901 (US); Nilsson, Anders, 1481 Hagan (NO)
(74) Representative: Teufel, Fritz, Dipl.-Phys.

(57) **Abstract**

The invention relates to a framework being used for developing software system e.g. for a business application. This framework includes a number of object oriented classes which may be processed by a computer system. The invention provides an interface and a base class which implements this interface that allows specific data to be added to the objects of classes supporting the interface at runtime without the need for subclassing of the original class. Specific data added in this way to an object are referred to as properties of the object, and the interface introduced by this invention is referred to as the property container interface.

The present invention is applicable in the techniclal field of application development of software systems, e.g. for a business application as Financial or Logistic and Distribution, wherein it is the purpose of frameworks to provide significant portions of the application that are common across multiple implementations of the application in a general manner, easy to extend for specific implementation.

## Description

### Field of the Invention

The present invention relates to a method of developing a software system using Object Oriented Technology and frameworks, in particular relates to a method for providing a framework, including a number of object oriented classes, allowing the modeling of businesses with a multiple level organizational structure.

The present application relates to the following co-pending applications filed by the same applicant.
- 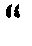 A method of developing a software system using Object Oriented Technology 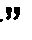 (Application No. 97114041.3)
- "A method for using decoupled chain of responsibility" (Application No. 97114040.5)
- "Framework for Business Applications providing financial integration" (Application No. 97114039.7)
- "Framework for business applications using cached aggregate and specification key (Application No. 97114038.9)
- "Method of error handling in a framework" (Application No. 97114036.3)
- "A method of locating software objects in different containers" ((Application No. 97114035.5)

### Description of the Prior Art

In order to maintain or enlarge their competitiveness, enterprises of almost every type of business all over theworld have to rework and bring up to date their information technology to meet customer 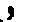 s requirements and thus to be successful in the market. But keeping an information system based on traditionally developed software up to date is at least an expensive undertaking, and in many cases it is an unsolvable problem. Object Oriented Technology or simply Object Technology, often abbreviated 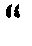 OOT 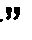 or simply 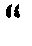 OT 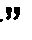 , has the technical potential to overcome the problems associated with development, maintenance, and extension of software applications within a company 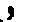 s information system and to provide interoperability and adaptability across multiple applications and hardware platforms.

Object Oriented Technology describes a method for the development of operating software as well as application software for a computer system. Contrary to the traditional, non object oriented ways of developing software, Object Oriented Technology comprises and uses preengineered 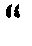 methods 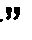 and 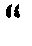 objects 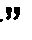 for the development of software, comparable to tools and parts for the development of an automobile.

Similar to the development of an automobile, wherein not each required screw is developed individually, but standardized screws are used which can be individually adapted by shortening to the required length, within the development of software, Object Oriented Technology provides a 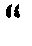 class 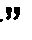 as a kind of software template from which individual 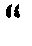 objects 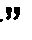 can be instantiated. These classes are usually stored in a software library or a so called 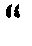 class library 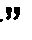 . A class library is simply a collection of several classes stored together in a special filing format called a library. Object oriented technology has the advantage that a software developer is able to work on a specific class or object without the knowledge of the other classes or objects.

For that purpose, a class should be designed such that each instantiated object of the class is a mirror of an object in the real world. E.g., a business partner class should be designed such that each of its instantiated business partner objects relates to one real business partner and that all data concerning this real business partner should be accessible by using this business partner object.

In Object Oriented Technology an 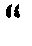 object 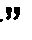 is a self-contained piece of software consisting of related data and procedures. Data means information or space in a computer program where information can be stored, e.g. a name or an inventory part number. Procedures are parts of a program that cause the computer to actually do something, e.g. the parts of a program which perform calculations or the part of a program that stores something on a computer disk. In Object Oriented Technology, an object 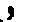 s procedures are called 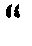 methods 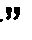 .

The concept of an object being a self-contained piece of software having data and procedures inside itself is a new way of developing software. In non object oriented software, most of the data for an entire program is often grouped together near the beginning of the program, and the procedures then follow this common pool of data. This conventional method worked okay for smaller programs, but as soon as a piece of software started to grow and become somewhat complex, it become increasingly difficult to figure out which procedures were using which data. This made it quite difficult and expensive to debug or change traditional software programs.

In Object Oriented Technology it is generally easier to debug, maintain, and enhance object oriented software. The three most popular object oriented programming languages are probably 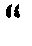 C++ 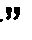 , 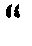 JAVA 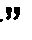 , and 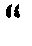 Smalltalk 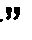 . The concept that both data and methods are contained inside an object is called 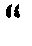 encapsulation 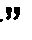 . Part of the concept of encapsulation is that an object has a predictable way of communicating with other objects, a so called predictable 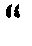 interface 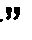 or sometimes also called the method contract.

Provided that interface will not be changed, the code or methods inside the object can be changed without disrupting other objects 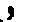 ability to interact with that object. For example, a TAX CALCULATION object would have a predictable interface for use by PAYCHECK objects. Provided that interface will not be changed, the detailed program code inside the TAX CALCULATION object could be changed whenever the tax laws changed, and no other objects in the payroll system would have to know anything about such changes.

In Object Oriented Technology the term 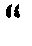 inheritance 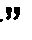 is used to communicate the concept that one object can inherit part of its behavior and data from another object, e.g. since an employee is a type of Person, an EMPLOYEE object might inherit the characteristics of a PERSON object, such as having name, birth date, and address data, as well as an EMPLOYEE object might inherit methods for updating and displaying these data.

Even if an object inherits some of its characteristics from other objects, that object can, and usually would, also have its own non-inherited characteristics, e.g. whereas a PERSON object would have an inheritable method to display a person 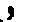 s address, a PERSON object would probably not have a method for displaying paycheck history, since not all persons get paychecks. Because an EMPLOYEE object could not inherit this method from a PERSON object, an EMPLOYEE object would have to define its own method for displaying paycheck history.

Although Object Oriented Technology clearly seems to be the most sophisticated way for the development, mainentance, and extension of software applications, many companies developing software applications are concerned about the cost and risks involved with the rework of existing applications and with the construction of new applications using Object Oriented Technology. For those software application developers, a technical foundation for software applications has to be built as a tool using Object Oriented Technology as the basis, allowing each developer to develop highly unique software products. This technical foundation is formed by frameworks comprising the basic application structure which software application developers previously had to develop by themselves.

In Object Oriented Technology the term 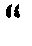 framework 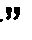 is used to describe a reusable set or collection of classes which work together to provide a commonly needed piece of functionality not provided by any of the individual classes inside the framework. Thus a framework defines a specific way in which multiple objects can be used together to perform one or more tasks which no single object performs. In other words, a framework is a reusable, predefined and preengineered bundle of several objects which address a recurring programming problem.

Frameworks provide a way of capturing a reusable relationship between objects, so that those objects do not have to be reassembled in that same relationship every time they are needed. Frameworks provide a way of grouping multiple objects together to perform some function which should not have to be thought through each time at the underlying object level. For example, a PRINT framework would consist of all the objects necessary for a programmer to easily print something on any printer, and would probably include objects for printer selection, spooling to disk or error detection as 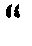 out of paper 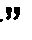 . Frameworks can be regarded as an group of software objects which contain a technical foundation for a software application. For example in the business field of Financial, Logistic and Distribution or Production. Although a framework represents a skeleton of a software application, usually a framework is not an executable software program.

Such frameworks may have for example two levels. In a first level, a framework provider develops general classes which may be adapted to be used in any application. Then, in a second level, a solution provider adapts this framework to a specific application, e.g. to a business application or a warehouse application and so on. This solution is finally used by e.g an insurance company or a retail company to run its business.

Prior art frameworks often include the business partner class as a base class with one or more additional subclasses. Such subclasses may be e.g. a business partner with shipping zone subclass that adds a shipping zone attribute and a business partner with freight charge subclass that adds a freight charge attribute. As known in object oriented technology, the subclasses derive their characteristics from the base class by inheritance.

In an example, a first application may use a business partner with shipping zone object by instantiating the business partner with shipping zone subclass and a second application may use a business partner with freight charge object by instantiating the business partner with freight charge subclass. By using these objects, the first and the second application are able to process specific functions. In particular, the first application assigns a specific shipping zone to objects of its specific business partner subclass, and the second application adds a specific freight charge to objects of its specific business partner subclass.

However, if the two applications described need to share business partner objects, a problem arises. The first application expects to work with objects of its own specific subclass of business partner, i.e. the business partner with shipping zone subclass. The second application knows nothing of the business partner with shipping zone subclass and will be unable to pass its business partner objects derived from its own business partner with freight charge subclass to any interfaces provided by the first application. Thus it is impossible to share business partner objects between the two applications.

By providing frameworks as the technical foundation for developing software applications, the following problems have to be addressed:

Applications have to support all hardware platforms and related software operating systems relevant on the market. Applications have to fulfill the requirements related to client/server configurations including the requirement for graphical user interfaces and windowing techniques. Also, applications have to offer internet compatibility and access on demand. Furthermore applications have to provide integrated solutions with respect to installed software.

Known from the prior art, see e.g. E. GAMMA et al: 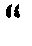 Design Patterns: elements of reusable object-oriented software 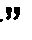 , Addison-Wesley, 1995, ISBN 0-201-63361-2, are two object oriented design patterns, 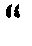 Chain of Responsibility 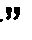 and 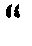 Strategy 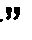 .

A requirement of frameworks is to allow the modeling of businesses with a multiple level organizational structure. It is necessary, given the requirements of business processes, that each company within an organizational structure should be able to tailor which information it shares with a parent organization and which information is specific to itself. In the case of an object oriented framework, this requirement means that Business Objects (B0s) must be defined in such a way that they can be selectively shared among the parent and child companies of an organizational structure. Specifically, if a parent company introduces a set of instances of a given type of business object, child companies must have the option to introduce their own sets of the given B0s, isolating themselves from the parent's set, share the parent's set entirely with no set being defined at their level, share the parent's set but "override" certain BOs with those contained by a set at their own level, share the parent's set but "hide" certain BOs in the set, and partially share the BOs themselves in the parent's set, that is, a subset of the BOs data should be public and shared by the parent with child companies while the remaining data should be private and specific to each company.

Within the accompanying figures, representation standards for classes, objects, relationships etc. are used at least partly according to Grady Booch: 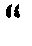 Object-Oriented Analysis and Design with Applications 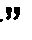 , second edition, The Benjamin/Cummings Publishing Company, Ind., Redwood City, CA, USA.

### Object of the Invention

It is an object of the present invention to provide a technical foundation for the development of software applications using Object Oriented Technology which overcomes the above discussed problems.

It is a further object of the present invention to provide a framework which allows the modeling of businesses with a multiple level organizational structure.

### Summary of the Invention

The present invention solves this object with methods and apparatus as layed down in enclosed independent claims. Particular embodiments of the present invention are presented in the respective dependent claims.

The invention provides a solution with a class which provides the ability that specific data may be added to its instantiated object by reference.

In particular, the invention provides an interface and a base class which implements this interface that allows specific data to be added to the objects of classes supporting the interface at runtime without the need for subclassing of the original class. Specific data added in this way to an object are referred to as properties of the object, and the interface introduced by this invention is referred to as the property container interface.

In the case of the above example, the invention only provides a business partner class that supports the property container interface but no subclasses. If an application wants to assign a shipping zone to a specific business partner, the specific data relating to the shipping zone may be added to the business partner object without creating a subclass. As well, if an application wants to calculate a freight charge for a specific business partner, the specific data relating to the freight charge may be added to the business partner object without creating a subclass. Instead, the shipping zone or the freight charge may be assigned to the specific business partner object at runtime as properties.

As well, it is possible that an application adds not only one, but several specific data to the business partner object, i.e. the specific data relating to the shipping zone, the specific data relating to the freight charge, specific data relating to an account code, and so on, without creating any subclass. Instead, these specific data may be assigned to the business partner object as properties.

This has the advantage, that all data relating to a business partner are included or referenced in the respective business partner object. The business partner class has no subclasses so that the data relating to the business partner is not partitioned into different objects. It is therefore possible that an application accesses all data relating to the business partner in the respective business partner object.

Compared to the prior art in which the business partner class is customized by creating subclasses, the invention provides the ability to customize the object of an instantiated class. This has the described advantage that only one business partner object exists for each business partner which includes or references all specific data of this business partner.

Furthermore, the present invention provides a framework to be used for developing a software system, e.g. for a business application, said framework comprising a number of objects which are to be processed by a computer system, characterised in that an organizational structure is represented by company objects organized in a tree structure, said company objects implement a property container interface providing an ability that specific data may be added to its instantiated object by a name, controller objects are attached to said company objects as properties.

To address all of the sharing requirements mentioned above, an abstract controller class is defined to present the common methods defined for the access of the controlled business objects. The interface presented by this abstract class is used by clients to access business objects from a controller.

Subclasses of the abstract controller class then provide the ability to isolate or merge layers of the company tree structure with respect to the controlled objects, i.e. the objects contained by the controller, attached to the company hierarchy, effectively creating logical views of the controlled objects over the company hierarchy without explicit knowledge or action by the client.

### Brief Description of the Drawings

- Figure 1: shows a class diagram with a base class and two subclasses according to the prior art;
- Figure 2: shows a class diagram with a property container interface and a property container base class according to the invention, and
- Figure 3: shows a business partner object according to the invention.
- Figure 4: shows a four layer schema from which software application can be developed using the present invention.
- Figure 5: shows a class representation of the chain of responsibility driven strategy.
- Figure 6: shows a concrete example of Root and Aggregating controllers and their interaction.
- Figure 7: shows a combination of two controller types.
- Figure 8: shows a method for property attribute retrieval when the business object has a hierarchy parent

### Detailed Description

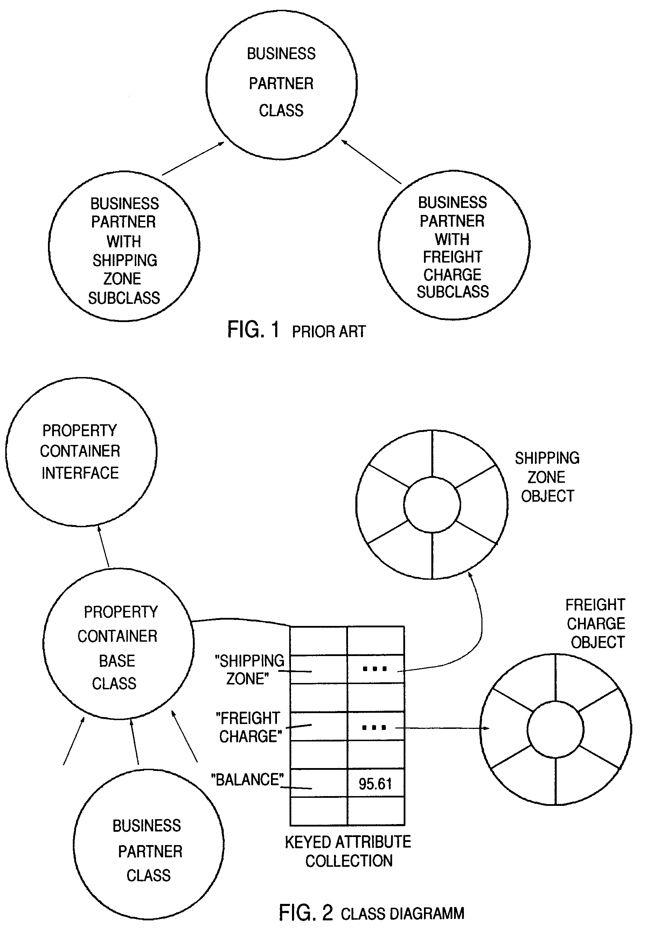

Figure 1 shows a class diagram with a base class and two subclasses according to the prior art. In the example of figure 1, the base class is a business partner class and the subclasses are a business partner with shipping zone subclass and a business partner with freight charge subclass. The two subclasses derive their characteristics from the base class by inheritence.

In a business processing environment, corresponding objects may exist from each of these classes. This means that across multiple applications a business partner with shipping zone object and a business partner with freight charge object may exist simultaneously that each represent the same actual business partner and duplicating common data for that business partner subclasses.

If a business application needs access to the shipping zone of a business partner it must require that the business partner be represented with an object of the specific business partner with shipping zone subclass. Likewise, if an application needs access to the freight charge information from a business partner it must require that the business partner be represented by an object of the business partner with fright charge subclass. Thus an object of the business partner with freight charge subclass could never be used in the first case, nor could an object of the business partner with shipping zone subclass be used in the second case. It would be impossible for a business process needing both shipping zone and freight charge information for a business partner to obtain it from any single business partner object.

Figure 2 shows a class diagram with the property container interface and property container base class according to the invention. At least one further class, e.g. a business partner class derives its characteristics from the property container base class by inheritance.

The property container interface introduces a protocol for inserting, accessing and deleting properties from an object of any class supporting the interface. The methods introduced by this interface are as follows:
"addPropertyBy(string propertyName,ObjectReference propertyObject)" This method allows clients of the object to add any object as a property of the property container object and associate with that property the given property name.
"getPropertyBy(string propertyName)" This method returns an object reference to the object representing the contained property associated with the given property name. If no such property exists, an error will be indicated.
"containsProperty(string propertyName)" This method is used to determine if a property container object has a property associated with the given property name.
"removePropertyBy(string propertyName)" This method is used to remove a property associated with a given property name from a property container object.

The property container base class contains a keyed attribute collection. This relationship is shown in figure 2. This keyed attribute collection is a dictionary or map style collection that uses strings identifying the properties as keys, e.g. "ShippingZone" as key for the shipping zone property. The values held by the keyed attribute collection are generic references, i.e. pointers to the objects that represent the properties, e.g. the shipping zone object shown in figure 2. Properties that are primitive types such as numbers or boolean flags are represented with simple container objects that contain the primitive type and are referenced as objects by the keyed attribute collection.

In the example of figure 2, the business partner class derives from the property container base class thus inheriting the interface methods introduced by the property container interface, as well as the keyed attribute collection and the implementation of the methods of the property container interface provided by the property container base class. The result of this inheritence is that the person writing the business partner class will not have to add any code to his class pertaining to properties, the behavior is completely inherited.

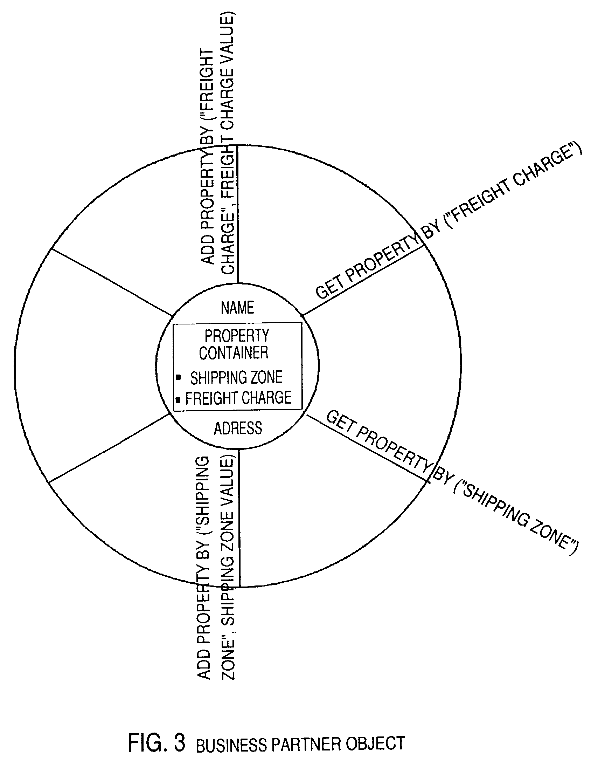

Figure 3 shows a business partner object according to the invention. This business partner object is the result of an instantiation of the property container base class shown in figure 2 for a specific business partner.

The business partner object includes the common data relating to the specified business partner which are from fixed attributes in the business partner class, e.g. name and address. However, the business partner object also contains data items that are not common to all applications but specific to a certain application, e.g. shipping zone and freight charge. These items are kept as properties in the inherited keyed attribute collection contained by the object. The keyed attribute collection is denoted in figure 3 by a rectangle called property container.

In the keyed attribute collection of the business partner object shown in figure 3, the shipping zone reference and the freight charge reference are included. Of course, it is possible that other or additional references are also included in the property container.

The methods inherited from the property container interface for accessing the properties are shown on the business partner object. The presence of these functions allows the business partner object maintain data items as properties without any real knowledge of the data in the properties. Specific data can then be added to the business partner object as properties by a business application at a later point in time, in particular during the runtime of the business application.

If the first business application wants to process a function, e.g. if the business application wants to assign a shipping zone to a specific business partner, it instantiates the business partner class of figure 2 and thereby creates the business partner object of figure 3 with some of the data of the specific business partner. Then, the business application adds the shipping zone reference into the property container of the business object in figure 3.

With the function
"AddPropertyBy("ShippingZone",ShippingZoneValue)" it is then possible for the business application to assign the value of a new specific shipping zone to the respective business partner. The new shipping zone is included in the shipping zone object and is accessible by the function "GetPropertyBy("ShippingZone")" by users of the business partner object.

The same is possible for freight charge information with the functions
"AddPropertyBy ("FreightCharge",FreightChargeValue)" and "GetPropertyBy("FreightCharge")".

Now, with the business partner object shown in figure 3 it is possible for an application concerned with processing of shipping zones and another concerned with processing of freight charges to use and share the same business partner object without conflict and without either application being aware of the other application's specific properties on the business partner object.

The first application instantiates the business partner class of figure 2 and thereby creates the business partner object of figure 3 with some of the data of the specific business partner. Then, the business application adds the shipping zone reference. When the new business partner object enters the scope of processing of the second application, the absence of a freight charge property will be detected and an appropriate freight charge property will be added to the object.

With this approach, either application can use the
"GetPropertyBy()" function to access application specific properties on a business partner object regardless of which application the business partner object was originated in. Business partner objects passed from one business application to another retain references to all of their associated properties, regardless of whether the using application has any knowledge of those properties.

The addition e.g. of the shipping zone reference or the freight charge reference into the property container may be done by the business application during the instantiation of the business partner class or later at runtime of the business partner object. The addition has the consequence that the reference to the object, e.g. shipping zone will be added to the keyed attribute collection contained by the business partner object. Later when the property, e.g. shipping zone is accessed, a reference to the object representing that property will be retrieved from the keyed attribute collection.

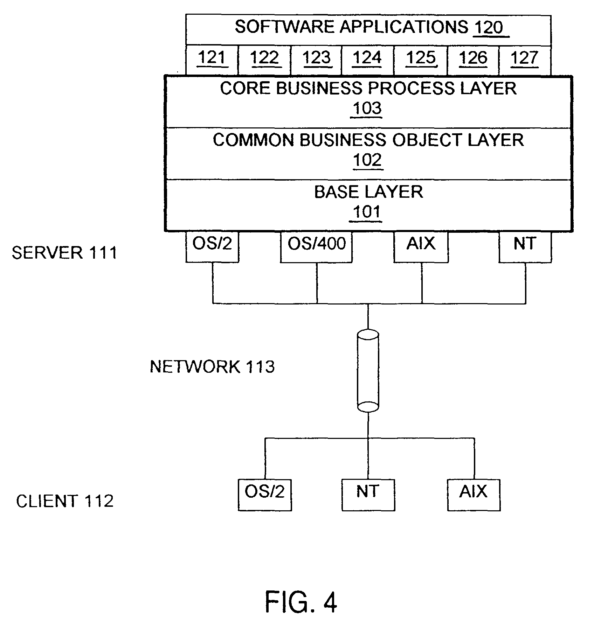

Developing software applications using the subject of the present invention as a development tool can be regarded as built up of four layers as shown in Figure 4.

The lowest layer is the base layer 101. The base layer 101 provides and manages the interface with the server hardware 111 which is potentially running under different operation systems such as OS/2, OS/400, AIX, and NT. The server hardware 111 is connected with client hardware 112 via a communication network 113. The client hardware 112 may also potentially running under different operation systems such as OS/2, NT, and AIX. The embodiment shown in Figure 4 shows the development of the server portion of a client/server application only.

The Base layer 101 represents the technical foundation for the higher level objects including many functions near to an operating system such as finding objects, keeping track of their names, controlling access to them, resolving conflicts, security administration, and installation. The Base layer 101 also includes the so called Object Model Classes which provide a consistent model for building objects while hiding the complexity of the underlying infrastructure form the software application developer. The Base layer 101 can be regarded as a kind of lower middleware necessary for the application of the Object Technology above it using the interface functionality provided by the Base layer 101.

Above the Base layer 101 there is a layer comprising Common Business Objects 102. This Common Business Object layer 102 provides a large number of objects which perform functions commonly needed within a business application, e.g. date and time, currency, address, units of measure, and calendar. These Common Business Objects represent the building blocks from which software application developers can select and create business applications, e.g. these Common Business Objects can be copied and extended to perform new functions as for example the date and time object can be extended to handle the Chinese calendar.

The layer 103 above the Common Business Objects layer 102 already comprises Core Business Processes and can be regarded as the Core Business Process layer 103. Although this layer 103 usually does not provide executable code, within this layer 103 the business software applications developed using the present invention begin to take shape. Each Core Business Process layer is built for one specific type of application, as for example General Ledger or Warehouse Management.

This Core Business Process layer 103 can be regarded as an upper middleware which - although not a complete software application program - already contains the basic funtions which all of the application programs of this type require. It is the Core Business Process layer 103 which creates the application frameworks, wherein some of the Common Business Objects are linked to a large number of objects specific to the type of framework being built, e.g. Warehouse Management. The resulting framework is constructed in a way to contain commonly used functions as well as to be easy to extend.

On top of the above described three layer model the application software is located, created by the software application developer and representing executable code. It is the choice of a software application developer whether to use only the base layer 101, the base layer 101 and the Common Business Object layer 102, or all three layers 101, 102, and 103 for the development of his software application. In every case he has to develop a remaining part of the application by himself and therefore every resulting software application program will be a completley unique product.

It has to be noted that the subject of the present invention is represented within the three layer model 101, 102, and 103 and is not represented by the executable code of the software application 121 developed using the present invention.

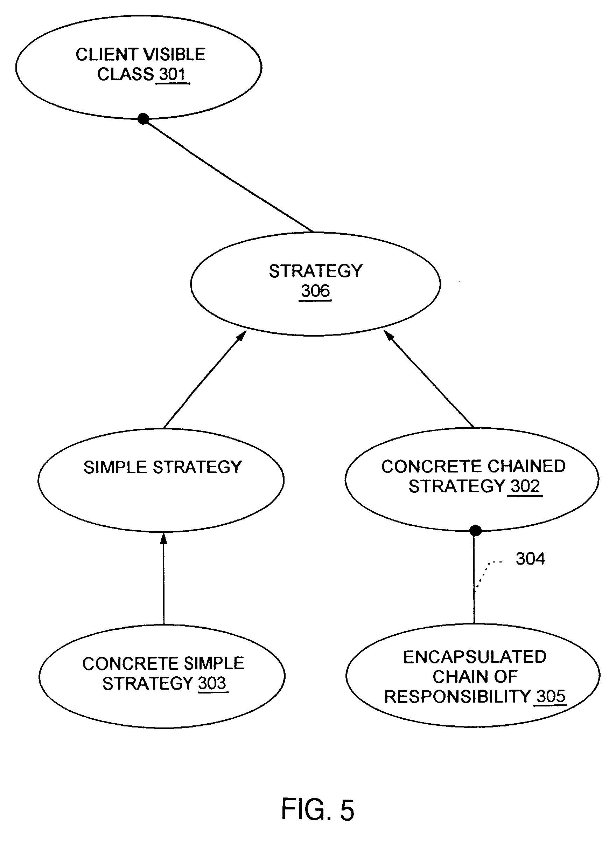

Figure 5 shows a class representation of the chain of responsibility driven strategy. The client visible class 301) can be configured with either a concrete chained strategy 302 or a concrete simple strategy 303, because both types of classes support the strategy interface 306. This allows the application developer or user to tune a particular client visible class instance 301 for performance, when using a concrete simple strategy 303, or for flexibility, when using a concrete chained strategy 302. Policy instances held as properties, may be instances of concrete chained strategy 302, thus providing even greater flexibility. This flexibilty can be extended indefinitely, although with corresponding reductions in performance. The relationship 304 between the concrete chained strategy 302 and an encapsulated chain of responsibility 305 may vary based on the actual usage, for example concrete chained strategy 302 implements encapsulated chain of responsibility 305 directly, or concrete chained strategy 302 holds one or more encapsulated chain of responsibility 305 objects, or concrete chained strategy 302 refers to one or more encapsulated chain of responsibility 305 objects held by property on other objects.

To address all of the sharing requirements according with the allowance of modeling of businesses with a multiple level organizational structure mentioned above, an abstract controller class is defined to present the common methods defined for the access of the controlled business objects. The interface presented by this abstract class is used by clients to access business objects from a controller. Two concrete subclasses of controllers are derived from this abstract controller class.

The first, called a "root" controller, is a controller that holds a collection of business objects and provides methods for creating and deleting business objects in that collection. Only those business objects in the root controller's collection can be accessed through this controller. Thus, when a company keeps a set of BOs in a root controller it is isolating itself from its parent's set (if one exists).

The second concrete subclass is an "aggregating" controller. Like the root controller, an aggregating controller holds a collection of business objects that it controls itself, but unlike the root controller, it has access to a 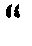 parent" controller which may be either a root or another aggregating. When business objects are accessed through an aggregating controller, the controller first checks its own collection for the requested business object (business objects are usually identified with a unique ID which is used to key them within the controller structure). If the requested business object is found there it is returned, if not the parent controller is retrieved and asked to return the requested business object. This behavior will repeat until the requested business object is found or until a root controller is encountered. This behavior allows an aggregating controller to appear to a client to have a "logical" scope that includes the business objects that it controls directly as well as those in its chain of parent controllers. The aggregating controller is also able to "override" a parent 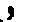 s business object with a matching one (matching unique ID) in its own collection.

A specialization of the aggregating controller is a subclass known as a "hiding" controller. In addition to providing all functionality of the aggregating controller, the hiding controller maintains a collection of business objects held by parent controllers that it wishes to "hide", typically by unique ID. When a business object with a given ID is requested from a hiding controller, the controller first checks its collection of "hidden" objects. If the object is found there, the controller indicates to the client that the requested business object is not found. If the object is not in the hidden object collection, it will be retrieved in the normal aggregating controller fashion. Hiding controllers allow a child company to hide specific business objects in the parent company's set while sharing others.

The type of recursive search used by aggregating controllers is a use of the "Chain of Responsibility" pattern (see E. GAMMA et al: 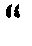 Design Patterns: elements of reusable object-oriented software 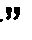 , Addison-Wesley, 1995, ISBN 0-201-63361-2). In the case of aggregating controllers the links of the chain are not direct. Instead, an aggregating controller accesses its parent by first going to its associated company (for which a direct link is held), accessing the parent company through the organizational tree structure of companies, and then using the property container interface of the parent company to request the parent controller. This modelling of the relationship between parent and child controllers allows controllers to be added, removed or changed at any level of the organizational structure without adversely affecting controllers at other levels, i.e. requiring aggregating controllers at lower levels to rebuild parent controller links when a new controller is added to a to a company between it and its current parent controller.

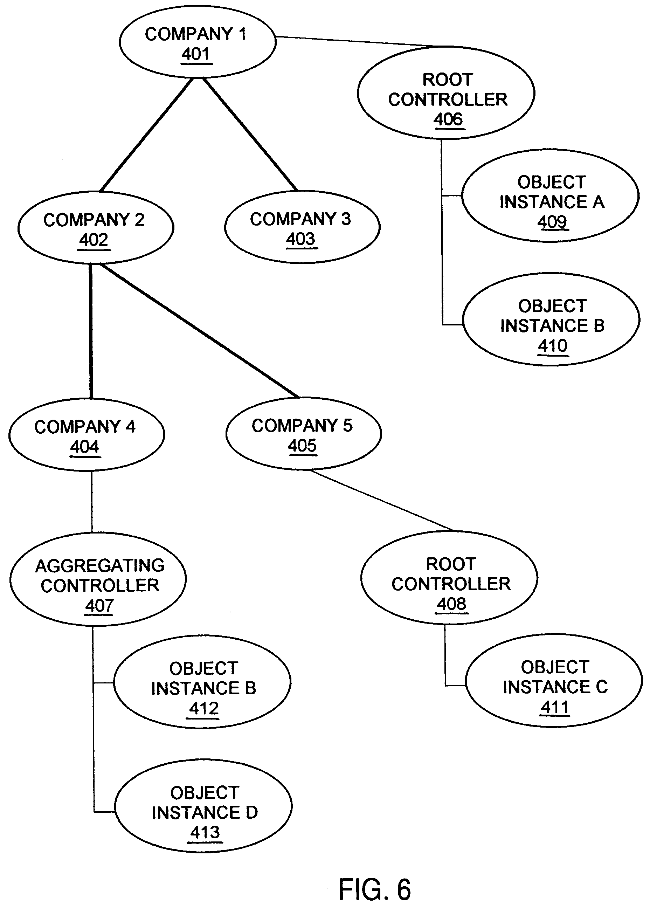

Figure 6 shows a concrete example of Root and Aggregating controllers and their interaction. In this example, a client using company 1 401 works with a Root controller 406 and sees controlled object instances A 409 and B 410. A client using either company 2 402 or company 3 403 works with the same Root controller 406 through the behavior of property controllers implemented by the company class. A client using company 4 404 works with aggregating controller 407 and sees controlled object instances A 409 (retrieved form the Root controller 406), B 412 (retrieved locally, thereby overriding the instance B 410 on the root controller) and D 413 (retrieved locally). A client using company 5 405 works with Root controller 408 and sees controlled object instance C 411 only. Object instances A 409 and B 410 are not visible in this case because the Root controller terminates the retrieval chain.

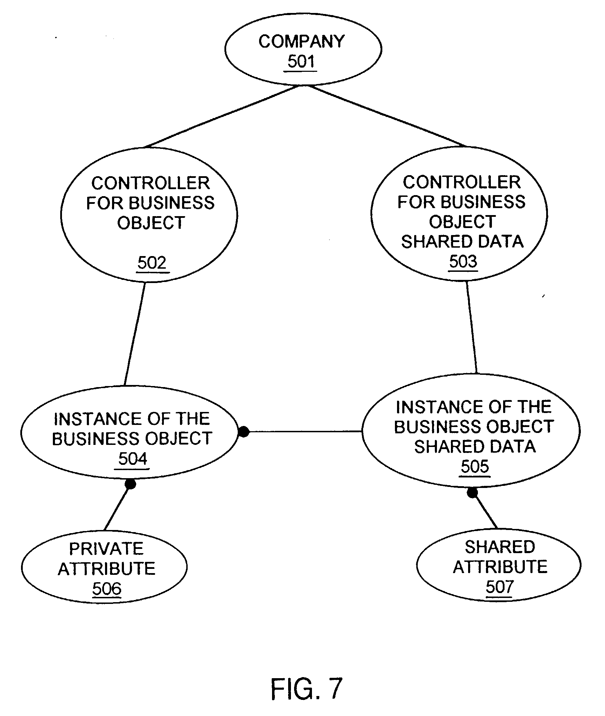

By combining two controller types and specifying their interaction when creating instances of their controlled classes, it is possible to implement business objects whose data is partially shared and partially private. As shown in Figure 7, one controller type 502 contains instances of the business object 504 (where private data is located) and the other controller type 503 contains instances of the business object 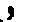 s shared data 505. Instances of the business object shared data 505 are created and maintained as any other framework object. An instance of the business object 504 may not be created unless an instance of the business object shared data with the same key (typically ID) already exists. The business object 504 then retrieves the business object shared data object from its controller 503 using its common key (ID) and maintains a reference to that object. Thus, the business object 504 logically represents the full behavior of the business object through its composite relationship. Retrieval of the controller for business object shared data 503 follows all the rules of property retrieval described earlier.

As described earlier, the business object 504 holds attributes that are private, such as object 506, while the associated shared data object 505 holds attributes that are shared such as object 507. The business object provides interfaces for setting and retrieving all private data as well as all shared data, thus supporting the full behavior of the compound business object. The business object 504 implements client calls to set and retrieve shared attributes (such as 507), by dereferencing its associated shared data object 505 and forwarding the information for the call to the associated accessor method for the attribute (507) on the shared data object 505, thereby setting the attribute on the shared data object in the case of a set or returning the attribute to the client in the case of a retrieve. The business object 504 implements client calls to set and retrieve private attributes (such as 506) by setting or retrieving the directly contained private attribute, the shared data object 505 is not involved in this case. The business object 504 also implements a method that returns a list of all shared data methods. This list can be used by a maintenance Graphical User Interface (GUI), for example to control access to the set methods for shared data.

Both the business object 504 (see property access diagram) and the shared data object 505 implement methods for setting and retrieval of attributes as properties. Attributes held as properties that are meant to be shared are held as properties on the shared data object 505. Attributes held as properties that are meant to be private are held as properties on the business object 504. Retrieval of attributes held as properties involves the following algorithm: The client calls a property retrieval method on the business object 504 passing the property ID of the attribute that is to be retrieved. If a property with matching ID is found on the business object 504, the attribute is returned to the client. If a property with matching ID is not found on the business object 504, the business object 504 dereferences the associated shared data object 505, and calls the appropriate property retrieval method on it, passing the property ID given by the client, the value returned from that call is then returned to the client.

An enhancement used in the frameworks to the property attribute resolution algorithm just described is to give the business object the ability to be placed in a hierarchy by adding a "parent" reference to another business object in each business object.

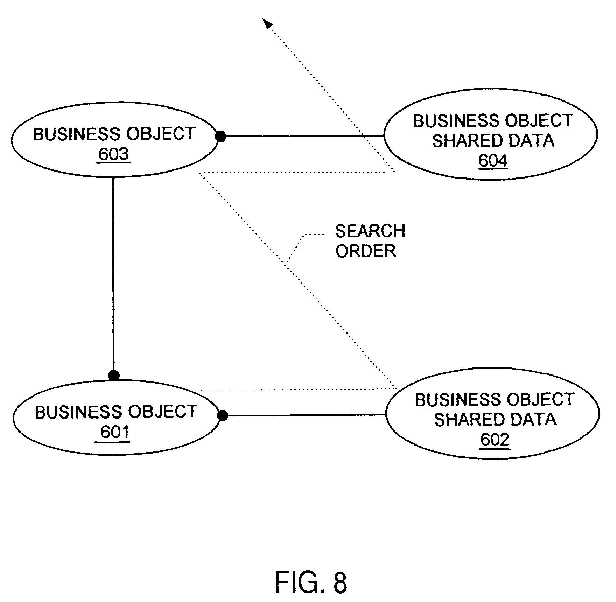

The method for property attribute retrieval when the business object has a hierarchy parent is shown in Figure 8 as follows: The client calls a property retrieval method on the business object 601 passing the property ID of the attribute that is to be retrieved. If a property with matching ID is found on the business object 601, the attribute is returned to the client. If a property with matching ID is not found on the business object 601, the business object 601 dereferences the associated shared data object 602 and calls the appropriate property retrieval method on it. If a property with matching ID is found on the shared data object 602, the attribute is returned to the client. If a property with matching ID is not found on the shared data object 602, the business object 601 then dereferences its parent business object 603 and calls the appropriate property retrieval method on it, causing the algorithm to be repeated on the parent object. Thus if the property is not found on the parent business object 603, the shared data object 604 will be tried, followed by the parent of 603 (if one exists). The retrieval algorithm terminates when either the property is found or the current business object in the search does not have a parent reference.

## Claims

1. Framework being used for developing a software system e.g. for a business application, said framework including a number of object oriented classes which may be processed by a computer system wherein one of said classes provides the ability that specific data may be added to its instantiated object by a name.

2. Framework according to claim 1 wherein said one of said classes has a relationship with a keyed attribute collection which is a collection of property names associated with object references.

3. Framework according to claim 2 wherein each of said references corresponds to one of said specific data.

4. Framework according to claim 2 wherein each of said references corresponds to an address.

5. Framework according to claim 4 wherein said address points to an object.

6. Framework according to claim 5 wherein said object includes said specific data.

7. Framework according to claim 1 wherein said instantiated object includes a keyed attribute collection.

8. Framework according to claim 7 wherein said keyed attribute collection provides the ability to include said reference to said specific data.

9. Framework according to claim 8 wherein said reference to said specific data may be included into said keyed attribute collection at runtime.

10. A framework to be used for developing a software system, e.g. for a business application, said framework comprising a number of objects which are to be processed by a computer system,
characterised in that
an organizational structure is represented by company objects organized in a tree structure,
said company objects implement a property container interface providing an ability that specific data may be added to its instantiated object by a name, and
controller objects are attached to said company objects as properties.

11. The framework according to claim 10, wherein
a controller class is introduced for each class of business objects that is subjected to sharing requirements.

12. The framework according to claim 11, wherein
for a given of said business objects said controller class provides an interface for clients to access, delete or create objects of said business object class.

13. The framework according to one of claims 10 to 12, wherein
said controller objects can be associated with said company objects as said properties at any point in said organizational structure.

14. The framework according to claim 11, wherein said controller classes providing
terminating behavior, said terminating behavior preventing controlled object instances contained in controllers higher in said company tree structure from being seen by a client, or
aggregating behavior, said aggregating behavior allowing said instances to be seen.

15. The framework according to claim 14, wherein
said aggregating behavior supports overriding of business object instances so that a local business object version will be visible in place of an instance with a same identifier (ID) residing higher in said company tree structure.

16. The framework according to claim 14 or 15, wherein
said hiding behavior preventing a business object residing higher in said company tree structure from being locally visible.

17. The framework of claim 11, wherein
a combination of controllers and interacting business object creation behavior allowing a business object to be composed of a private portion and a shared portion, said client seeing only a composite business object representing a sum total of private and shared components.

18. A method of developing a software system using an Object Oriented Technology and a framework, said framework is according to one of claims 1 to 17.

19. A data storage medium characterised in that said data storage medium is storing a framework, said framework is according to one of claims 1 to 17.
